# EUROPEAN PATENT SPECIFICATION

(11) **EP 3 295 131 B1**
(45) Date of publication and mention of the grant of the patent: **24.03.2021**
(21) Application number: 16705803.1
(22) Date of filing: 23.02.2016
(51) Int. Cl.: G01F 1/66, G01H 5/00, G01F 23/296

(54) **METHOD FOR DETERMINING A TRANSIT TIME OF AN ULTRASONIC BURST, IN PARTICULAR IN AN ULTRASONIC FLOW METER, AND RELATED FLOW METER**
VERFAHREN ZUR BESTIMMUNG DER LAUFZEIT EINES ULTRASCHALLBURSTS, INSBESONDERE IN EINEM ULTRASCHALLDURCHFLUSSMESSER, SOWIE VERWANDTER DURCHFLUSSMESSER
PROCÉDÉ DE DÉTERMINATION DU TEMPS DE TRANSIT D'UNE SALVE D'ULTRASONS, EN PARTICULIER DANS UN DÉBITMÈTRE À ULTRASONS, ET DÉBITMÈTRE ASSOCIÉ

(30) Priority: 08.05.2015 DK 201500276
(43) Date of publication of application: 21.03.2018
(73) Proprietor: Danfoss A/S, 6430 Nordborg (DK)
(72) Inventor: JESPERSEN, Lars, 6400 Sønderborg (DK)
(86) International application number: PCT/EP2016/053748
(87) International publication number: WO 2016/180549

(56) References cited:
- US-A- 6 009 380
- US-B1- 6 595 070

## Description

The present invention relates to a method for determining a transit time of an ultrasonic burst, in particular in an ultrasonic flow meter, according to the preamble of claim 1.

Furthermore, the invention relates to a flow meter, in particular an ultrasonic flow meter, according to the preamble of claim 13.

Such a method is known from US 6 009 380 A. Two sets of signals having slightly different career frequencies are generated, each set of signals having two signal bursts. A time difference between the signal bursts is determined by having a time distance between quests of the amplitudes of the two bursts of each set of signals.

US 6 595 070 B1 describes an acoustic flow meter in which three transmitter/receivers are provided comprising at least two pairs of acoustic transducers. Each pair has a distance between the transducers which is different from the other pair. The transducers are arranged to transmit wave packets up and down between the pairs of transducers. The wave packets comprise a signal including zero crossings spaced apart by a packet period corresponding to the packet frequency. Successes wave packets have different center frequencies. The zero crossings are identified as being correct when they are aligned on all three transducers.

A further method and further flow meter is known, for example, from EP 2 511 673 A1.

The method is in particular useful in ultrasonic flow meters based on the transit time difference principle. The transit times of sound bursts transmitted upstream and downstream, between two transducers placed oppositely in a flow tube are measured. The flow speed is directly proportional to the difference between the upstream transit time and the downstream transit time.

The accuracy of the measurement is therefore dependent on the accuracy of determining the transit time. Usually the costs for an equipment for determining the transit time increases with increasing accuracy. The object underlying the invention is to reliably determine a transit time with low costs.

This object is solved with a method as described at the outset using the features of claim 1.

When two transmit signals are used having different frequencies corresponding receive signals are obtained. These receive signals show characteristics which can be used to obtain a function of time. The function of time in turn can be used to determine the transit time. A main advantage of measuring the transit time is that the speed of sound variation is compensated directly as apposed to being measured indirectly via a temperature measurement and a known relation between speed of sound for the media and the media temperature.

A time in which a predetermined characteristic of said first receive signal satisfies a predetermined condition is determined as a first time, a time in which a corresponding predetermined characteristic of said second receive signal satisfies said condition is determined as a second time, a time in which said predetermined characteristic of said first receive signal satisfies said condition later again is determined as a third time, a time in which said predetermined characteristic of said second receive signal satisfies said condition later again is determined as a fourth time, a first time difference between said second time and said first time is determined, a second time difference between said fourth time and said third time is determined, and said transit time is determined using a function of time differences over time, said function comprising at least a pair of said first time difference and one of said first time and said second time and a pair of said second time difference and one of said third time and said fourth time. Preferably said predetermined characteristic is an amplitude level. In particular it is preferred that said predetermined condition is a zero crossing. However, another information than strictly the zero crossings can be used, e.g. using samples from an analog-digital-converter from which similar information can be extracted. The measurements are made in the least noise sensitive part of the signal, i.e. the zero crossings or near zero crossings. Since zero crossings are used, the method is independent to a great extent on receive signal amplitudes. As separate trigger circuits can be avoided the method can be implemented with low costs. The method is relatively insensitive to changes in receive signal shape. When the first transmit signal is generated, a corresponding burst is transmitted from a transmitter to a receiver. The receiver detects the receive signal. The terms "transmitter" and "receiver" are used to explain the specific functions of these elements. Basically transducers are used which can transmit and receive signals and therefore function as both transmitter and receiver. An embodiment of the invention is based on the idea that the relation between time differences and respective time follows a unique function. This function comprises a starting point in which the time difference between the two receive signals of different frequencies is zero. This starting point therefore reflects the transit time. The term "zero crossing" is used to simplify the explanation. It is not limited to exactly the points where the signal crosses its own average value. In particular it is possible to define another signal level near the average value of the signal, the crossing of which is considered as "zero crossing" as well. The zero crossing covers also cases of using digitally sampled signals where information corresponding to the zero crossing times can be deducted by various methods, from one or several samples of the signal around the "zero crossings" or around signal peaks. There are several methods to derive information corresponding to the signal zero crossing or for the signal peaks from a sampled signal. The methods outlined in the following should only be considered as examples of how the information can be derived as numerous other methods exists. Among these are various methods involving Fourier transforms.

Using the sampled signal, a first way would be to fit a straight line to two samples around the signal zero crossing to be calculated. The zero crossing time is calculated from where the line crosses the signal average value.

Another possibility is to fit a straight line to more than two samples, e.g. by using a "least squares" method to fit the line to a number of samples. The zero crossing time is calculated from where the line crosses the signal average value.

Another possibility would be the use of an appropriate function (polynomial, sine, etc.) which is fitted to samples around the signal zero crossing to be calculated. The zero crossing time is calculated from where the function crosses the signal average value.

An appropriate function (polynomial, sine, etc.) can as well be fitted to samples around one of the peaks of the signal. By differentiating the found function, the time position of the signal peak can be calculated. These times can be used as an alternative to the zero crossing.

Finally it is possible to use a difference function of the receive signal which is found by calculating the differences between consecutive samples of the sampled signal. The zero crossings of the difference function correspond to the peaks of the original signal. The peak positions of the original signal can thus be found using one of the methods previously described on the zero crossings of the difference signal.

Preferably said function comprises at least a pair of said first time difference and said first time and a pair of said second time difference and said third time.

Preferably said pairs are selected in a range of said function in which said function shows a constant slope. This constant slope makes it easier to determine the transit time.

Preferably said transit time is determined by selecting a point on a time axis in which said constant slope intersects said time axis and subtracting a constant offset time from said point. The offset time can be determined in the factory of the flow meter or of any other equipment in which the transit time has to be determined. Once the constant of said time has been determined it can be used since it does not change.

Preferably more than two pairs of time differences and times are used to determine whether said slope is constant. In this way it is possible to select the range of the function in which the slope is constant.

In an alternative or additional embodiment of the method said pairs are selected in a middle region of said receive signal. In the middle region it can be assumed that the slope is constant.

Preferably said first transmit signal and said second transmit signal are generated using the same frequency source producing a master frequency, wherein said first frequency and said second frequency are generated by dividing said master frequency by different factors. In this way it is possible with simple means to obtain the first frequency and the second frequency which are directly related to each other so that the time differences can be determined with sufficient accuracy.

Preferably said first frequency is generated by dividing said master frequency by a first factor and said second frequency is generated by dividing said master frequency alternatingly by a second factor and a third factor different from said second factor. In this case the second frequency is formed by an average value, i.e. the second frequency is obtained only when considering two cycles of the second transmit signal. However, in this way it is possible to obtain a pair of a first frequency and of a second frequency with smaller frequency differences.

In the last case it is preferred that in said receive signal zero crossings are measured at points that are a multiple of two cycles apart. In this way it is possible to average out inaccuracies which can arise from the different factors used to produce the second frequency.

In another preferred embodiment said first transmit signal and said second transmit signal are generated using different master frequencies and the same factor for dividing said master frequencies. In this case only a single frequency divider is required.

The object is solved with a flow meter as described at the outset having the features of claim 13.

The flow meter is operated according to the method described above.

A preferred embodiment of the invention is now described in more detail with reference to the drawing, in which:
- Fig. 1: shows a schematic view of an ultrasonic flow meter,
- Fig. 2: shows schematically two transmit signals of different frequencies,
- Fig. 3: shows schematically corresponding receive signals,
- Fig. 4: shows a function describing a relation between time differences and times and
- Fig 5: shows schematically generation of transmit signal frequencies.

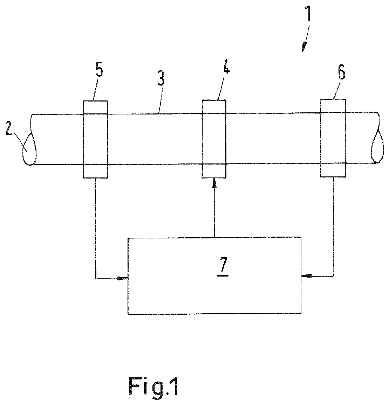

Fig. 1 schematically shows an ultrasonic flow meter 1. The flow meter 1 comprises a flow path for a fluid which is located within a tube 3. A transmitter 4 is arranged to transmit a burst through the flow path 2. This burst is received by an upstream receiver 5 and by a downstream receiver 6. The transmitter 4, the upstream receiver 5 and the downstream receiver 6 are connected to a control unit 7.

The illustration in Fig. 1 is chosen to simplify the explanation of the invention. In reality there would be only two transducers which can work as transmitter and as receiver. Normally there would be two or more transducers forming one or more sound paths arranged to transmit and receive sound bursts through the flow path - in directions that are essentially in- and against the direction of flow. In the case of a pulsed doppler flow meter even a single transducer, alternatingly transmitting and receiving bursts, in the direction - or against the direction of flow could be used.

The control unit 7 determines a transit time between the transmitter 4 and the upstream receiver 5 and it determines as well a transit time between the transmitter 4 and the downstream receiver 6. As it is known, the flow speed of a fluid in the flow path 2 is directly proportional to the difference between the upstream transit time and the downstream transit time.

The control unit 7 is used to determine the respective transit times.

In many cases transducers can be used which can be operated as transmitter and as receiver. It is therefore also possible to omit the downstream receiver 6 and to use the transmitter 4 for transmitting a burst in upstream direction which is received by receiver 5 and to use the upstream receiver 5 to produce a burst in downstream direction which is received by transmitter 4. In this case the upstream transit time and the downstream transit time have to be determined at different times.

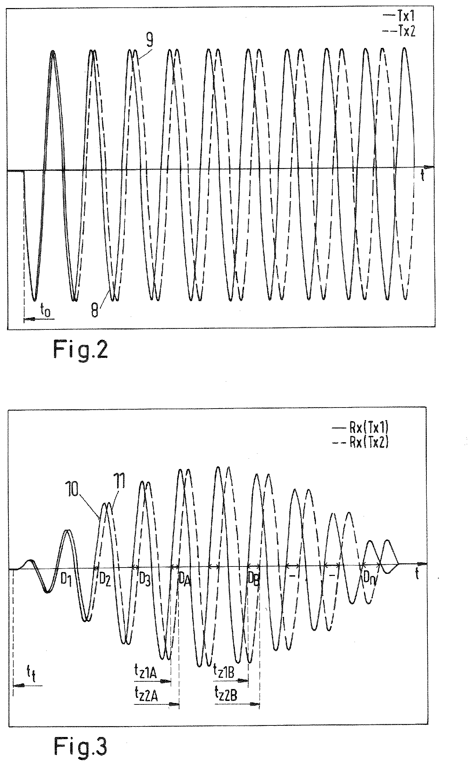

To determine the transit time between the transmitter 4 and the upstream receiver 5, the control unit 7 generates a first transmit signal 8 shown with full lines in Fig. 2 and a second transmit signal 9 shown with dashed lines in Fig. 2. The first transmit signal 8 and the second transmit signal 9 have different frequencies. The transmitter 4 converts the first transmitter signal 8 in a first burst and the second transmit signal 9 in a second burst.

For each transit time measurement in each flow direction, two separate time measurements are carried out. The first measurement is carried out with the first transmit signal 8 with a frequency f_{Tx1}. The second measurement is carried out with the second transmit signal 9 with a frequency f_{Tx2}. For the example transmit signals 8, 9 shown in Fig. 2 a frequency of the first transmit signal 8 is 5 % higher than the frequency of the second transmit signal 9. However, it is also possible that the frequency of the second transmit signal 9 is higher than the frequency of the first transmit signal 8.

It also would be possible to make first a normal up/down measurement with one frequency succeeded by another normal up/down measurement with another frequency - and from these measurements deduct the same information as described in the following.

The method of transmitting with both frequencies in one direction - before changing the direction is preferred though - i.e. because the two measurements can be made in rapid succession without paying too much attention to echoes from the first transmission, i.e. if only the first measurement is used for difference time calculation and the second only for determining transit time.

The start time of both transmit signals 8, 9 is denoted t₀.

Fig. 3 shows the corresponding receive signal, i.e. a first receive signal 10 corresponding to the first transmit signal 8 and a second receive signal 11 corresponding to the second transmit signal 9.

The two receive signals 10, 11 start off from a common starting point at the transit time tₜ, where the sound wave from the transmission enters the upstream receiver 5.

From this common starting point, the zero crossings of the two receive signals 10, 11 gradually separate due to the different frequencies. The time differences between the positive zero crossings are denoted D₁-Dₙ.

It is possible to assign to each zero crossing of first receive signal 10 a corresponding zero crossing of second receive signal 11. It is just necessary to count the number of positive zero crossings of each receive signal 10,11 to determine which zero crossing of first receive signal 10 corresponds to a zero crossing of second receive signal 11. Another way would be to start the measurements at known points in time.

The zero crossing times to be measured are denoted T_{Z1A}, T_{z2A}, T_{z1B}, T_{z2B} and the respective differences are noted D_{A} and D_{B}.

In this way it is possible to determine a time of a zero crossing of the first receive signal 10 as a first time T_{z1A}, a time of a corresponding zero crossing of the second receive signal 11 as a second time T_{z2A}, the time of another zero crossing of the first receive signal 10 as a third time T_{z1B}, and a time of another corresponding zero crossing of the second receive signal 11 as a fourth time T_{z2B}. The first time difference D_{A} between said second time T_{z2A} and said first time T_{z1A} is determined and a second time difference D_{B} between said fourth time T_{z2B} and said third time T_{z1B} is determined.

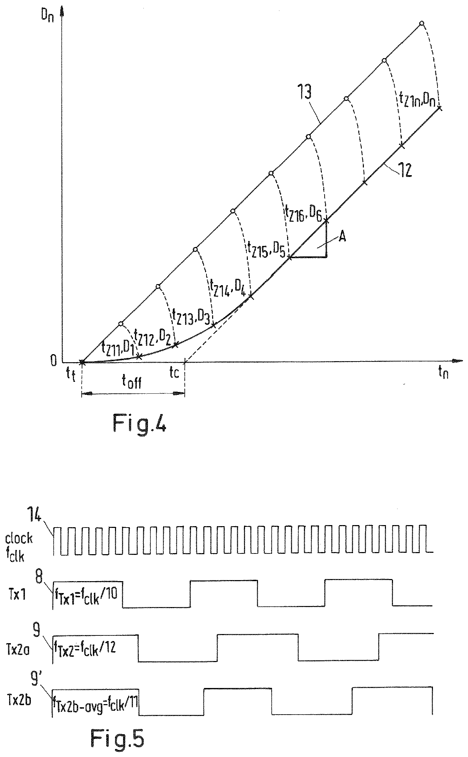

In Fig. 4 the positive zero crossing differences Dₙ(tₙ) are plotted versus zero crossing times tₙ of the first receive signal 10, i.e. in a two dimensional coordinate system in which the vertical axis shows the time differences Dₙ and the horizontal axis show the time of the differences tₙ.

It can be seen that the pairs of time difference and time form a graph 12 of a function. The graph or curve 12 shows the behavior of real bandwidth limited transducers, including various acoustical and electric delays. For this real case, the frequency of the transducers starts off at the resonant frequency and is then gradually forced to follow the respective transmit frequencies. Once the transmit frequencies have been achieved, a slope A of the graph 12 becomes constant. It should be noted that the illustration of Fig. 3 is chosen for illustration of the invention and does not fully reflect the real behavior of the receive signal. Fig. 2 and 3 are only meant to show the principle of the zero crossing times gradually moving apart due to the different frequencies. Using the Fig. 2 transmit signals, the corresponding receive signals would grow in amplitude for as long as the duration of transmit signals and decay hereafter. Also the zero crossings would only be moving apart for approximately the duration of the transmit signals.

Another graph 13 shows how the differences would behave for ideal infinite bandwidth transducers. The transducers in this case immediately follow the transmit frequency and hence, the zero crossing differences start off directly from tₜ with a constant slope which is directly proportional to the frequency difference. By calculating the slope between two separate zero crossing differences, tₜ can be calculated.

However, since the method is performed with real bandwidth limited transducers, a function corresponding to graph 12 is obtained and with help of this function the starting point tₜ can be calculated. The difference between the starting point tₜ and the zero time t₀ of Fig. 2 is the transit time.

In order to simplify the determination of the transit time it is in most cases sufficient to determine the slope A of the graph 12, i.e. of the function. This slope A can, however, be determined only in a range of the function in which this slope is constant.

There are two possibilities to be sure that the slope is constant. One possibility is to use more than two pairs of time differences and time to determine whether the slope A is constant. Another possibility is to use time differences in the middle of the receive signal, in the present case the fourth and the sixth positive zero crossings. Preferably just two pairs would be used at a time, but more measurements could be made with different starting points to determine if the slope is constant.

When the constant slope is known a time t_{c} can be determined in which the slope intersects the time axis tₙ. A constant offset time t_{off} is subtracted from this intersecting time t_{c} to arrive at the transit time tₜ. The offset time t_{off} can be determined in the factory. It does not change during use of the ultrasonic flow meter, as long as the bandwidth of the transducers (transmitter 4 and receiver 5, 6) is constant. For the same reason it will be advantageous to use transducers with a high bandwidth. A high bandwidth transducer will have a small offset time t_{off} and the requirements for a constant bandwidth are therefore comparably smaller. The use of the "essentially" constant slope range of the function is one possible embodiment that simply allows for the use of a straight line fit to the function to determine the intersecting time t_{c} and the transit time tₜ.

Another reason for a fairly high bandwidth or fairly low Q is that the transducer bandwidth obviously should be wide enough to cover both transmit frequencies.

A third reason to use high bandwidth transducers is that it is desired to measure flow at the earliest possible zero crossings as later points in the signals are more likely to have been influenced by reflections from e.g. the pipe wall. When using a straight line fit the measurement points must be in the "constant slope of D range" of the signals. The range is delayed into the signal in reverse proportion to the bandwidth.

Fig. 5 shows schematically an example of the generation of the transmit signals.

In the present case the transmit signals 8, 9 can be generated from a clock frequency F_{clk}.

This clock frequency F_{clk} must be high enough to generate two signals with a small frequency difference. As shown in Fig. 5, a frequency difference of 20 % would require, for example, a clock frequency F_{clk} of 12 MHz if symmetrical transmit signals are required.

Fig. 5 shows an example with a clock signal 14 having a frequency f_{clk} 12 MHz.

Using a frequency divider the first transmit signal 8 is generated by dividing the clock signal 14 by the factor 10 so that the first transmit signal has a frequency f_{Tx1}, of 1.2 MHz. In a similar way the second transmit signal 9 is obtained by dividing the clock signal 14 by the factor 12 to obtain a frequency f_{Tx2} = 1 MHz. The clock signal 14 is generated from a fixed clock frequency.

To achieve symmetrical transmit signal with a relative higher frequency resolution, it may be possible though to generate a signal like the signal 9' shown in Fig. 5, where every second cycle changes between a low frequency and a high frequency to obtain an average frequency of e.g. f_{clk}/11 as shown. Here the bandwidth Q of the transducer may be a help in averaging the two frequencies and it may be advantageous to measure the receive signal zero crossings at points that are a multiple of two cycles apart.

## Claims

1. Method for determining a transit time (tₜ) of an ultrasonic burst, in particular in an ultrasonic flow meter, said method comprising generating a first transmit signal (8) having a first frequency (f_{Tx1}) and detecting a first receive signal (10), generating a second transmit signal (9) having a second frequency (f_{Tx2}) different from said first frequency (f_{Tx1}) and detecting a second receive signal (11), wherein a function of time based on characteristics of the two receive signals (10, 11) is used for determining the transit time, a time in which a predetermined characteristic of said first receive signal (11) satisfies a predetermined condition is determined as a first time (t_{Z1A}), a time in which a corresponding predetermined characteristic of said second receive signal satisfies said condition is determined as a second time (t_{Z2A}), a time in which said predetermined characteristic of said first receive signal (11) satisfies said condition later again is determined as a third time (t_{Z1B}), a time in which said predetermined characteristic of said second receive signal satisfies said condition later again is determined as a fourth time (t_{Z2B}), a first time difference (D_{A}) between said second time (t_{Z2A}) and said first time (t_{Z1A}) is determined, and a second time difference (D_{B}) between said fourth time (t_{Z2B}) and said third time (t_{Z1B}) is determined, **characterized in that** said transit time (tₜ) is determined using a function (12) of time differences (Dₙ(tₙ)) over time (tₙ), said function (12) comprising at least a pair of said first time difference (D_{A}) and one of said first time (t_{Z1A}) and said second time (t_{Z2A}) and a pair of said second time difference (D_{B}) and one of said third time (t_{Z1B}) and said fourth time (t_{Z2B}).

2. Method according to claim 1, **characterized in that** said predetermined characteristic is an amplitude level.

3. Method according to claim 2, **characterized in that** said predetermined condition is a zero crossing.

4. Method according to any of claims 1 to 3, **characterized in that** said function (12) comprises at least a pair of said first time difference (D_{A}) and said first time (t_{Z1A}) and a pair of said second time difference (D_{B}) and said third time (t_{Z1B}).

5. Method according to any of claims 1 to 4, **characterized in that** said pairs are selected in a range of said function (12) in which said function shows a constant slope (A).

6. Method according to claim 5, **characterized in that** said transit time (tₜ) is determined by selecting a point (t_{c}) on a time axis in which said constant slope (A) intersects said time axis and subtracting from said point a constant offset time (t_{off}).

7. Method according to claim 5 or 6, **characterized in that** more than two pairs of time differences and times are used to determine whether said slope (A) is constant.

8. Method according to any of claims 5 to 7, **characterized in that** said pairs are selected in a middle region of said receive signal (8).

9. Method according to any of claims 1 to 8, **characterized in that** said first transmit signal (8) and said second transmit signal (9) are generated using a same frequency source producing a master frequency (f_{clk}), wherein said first frequency (f_{TX1}) and said second frequency (f_{TX2}) are generated by dividing said master frequency (f_{clk}) by different factors.

10. Method according to claim 9, **characterized in that** said first frequency (f_{TX1}) is generated by dividing said master frequency (f_{clk}) by a first factor and said second frequency (T_{x2B}) is generated by dividing said master frequency (f_{clk}) alternatingly by a second factor and a third factor different from said second factor.

11. Method according to claim 10, **characterized in that** in said receive signal zero crossings are measured at points that are a multiple of two cycles apart.

12. Method according to any of claims 1 to 8, **characterized in that** said first transmit signal (8) and said second transmit signal (9) are generated using different master frequencies and the same factor for dividing said master frequencies.

13. Flow meter, in particular an ultrasonic flow meter, comprising means for generating a first transmit signal (8) having a first frequency (f_{Tx1}) and means for detecting a first receive signal (10), means for generating a second transmit signal (9) having a second frequency (f_{Tx2}) different from said first frequency (f_{Tx1}) and means for detecting a second receive signal (11), wherein control means are connected to said means for generating said first transmit signal (8), to said means for detecting said first receive signal (10), to said means for generating said second transmit signal (9), and to said means for detecting said second receive signal (11), said control means determining the transit time by means of a function of time based on characteristics of the two receive signals (10, 11), wherein the control means determine a time in which a predetermined characteristic of said first receipt signal 11 satisfies a predetermined condition as a first time (t_{Z1A}), a time in which a corresponding predetermined characteristic of said receipt signal satisfies said condition as a second time (t_{Z2A}), a time in which said predetermined characteristic of said first receipt signal (11) satisfies said condition later again as a third time (t_{Z1B}), a time in which said predetermined characteristic of said second receipt signal satisfies said condition later again as a force time (t_{Z2B}), a first time difference (D_{A}) between said second time (t_{2A}) and said first time (t_{Z1}) and a second time difference (D_{B}) between said fourth time (t_{Z2B}) and said third time (t_{Z1B}), **characterized in that** the control mean determine said transit time (tₜ) using a function (12) of time differences (Dₙ)(tₙ)) over time (tₙ), said function (12) comprising at least a pair of said first time difference (D_{A}) and one of said first time (t_{Z1A}) and said second time (t_{Z2A}) and a pair of said second time difference (D_{B}) and one of said third time (t_{Z1B}) and said fourth time (t_{Z2B}).

## Patentansprüche

1. Verfahren zum Bestimmen einer Laufzeit (tₜ) eines Ultraschallbursts, insbesondere in einem Ultraschalldurchflussmesser, wobei das Verfahren das Erzeugen eines ersten Sendesignals (8) mit einer ersten Frequenz (f_{Tx1}) umfasst,
und Erkennen eines ersten Empfangssignals (10), Erzeugen eines zweiten Sendesignals (9) mit einer zweiten Frequenz (f_{TX2}), die von der ersten Frequenz (f_{Tx1}) verschieden ist, und Erkennen eines zweiten Empfangssignals (11), wobei eine auf Eigenschaften der beiden Empfangssignale (10, 11) basierende Zeitfunktion zum Bestimmen der Laufzeit verwendet wird, eine Zeit, in der eine vorbestimmte Eigenschaft des ersten Empfangssignals (11) eine vorbestimmte Bedingung erfüllt, als eine erste Zeit (t_{Z1A}) bestimmt wird, eine Zeit, in der eine entsprechende vorbestimmte Eigenschaft des zweiten Empfangssignals die Bedingung erfüllt, als eine zweite Zeit (t_{Z2A}) bestimmt wird, eine Zeit, in der die vorbestimmte Eigenschaft des ersten Empfangssignals (11) die Bedingung später wieder erfüllt, als eine dritte Zeit (t_{Z1B}) bestimmt wird, eine Zeit, in der die vorbestimmte Eigenschaft des zweiten Empfangssignals die Bedingung später wieder erfüllt, als eine vierte Zeit (t_{Z2B}) bestimmt wird, eine erste Zeitdifferenz (D_{A}) zwischen der zweiten Zeit (t_{Z2A}) und der ersten Zeit (t_{Z1A}) bestimmt wird, und eine zweite Zeitdifferenz (D_{B}) zwischen der vierten Zeit (t_{Z2B}) und der dritten Zeit (t_{Z1B}) bestimmt wird, **dadurch gekennzeichnet, dass** die Laufzeit (tₜ) unter Verwendung einer Funktion (12) von Zeitdifferenzen (Dₙ(tₙ)) über die Zeit (tₙ) bestimmt wird, wobei die Funktion (12) mindestens ein Paar aus der ersten Zeitdifferenz (D_{A}) und eines der ersten Zeit (t_{Z1A}) und der zweiten Zeit (t_{Z2A}) und ein Paar aus der zweiten Zeitdifferenz (D_{B}) und eines der dritten Zeit (t_{Z1B}) und der vierten Zeit (t_{Z2B}) umfasst.

2. Verfahren gemäß Anspruch 1, **dadurch gekennzeichnet, dass** das vorbestimmte Merkmal ein Amplitudenpegel ist.

3. Verfahren gemäß Anspruch 2, **dadurch gekennzeichnet, dass** die vorbestimmte Bedingung ein Nulldurchgang ist.

4. Verfahren gemäß einem der Ansprüche 1 bis 3, **dadurch gekennzeichnet, dass** die Funktion (12) mindestens ein Paar aus der ersten Zeitdifferenz (D_{A}) und der ersten Zeit (t_{Z1A}) und ein Paar aus der zweiten Zeitdifferenz (D_{B}) und der dritten Zeit (t_{Z1B}) umfasst.

5. Verfahren gemäß einem der Ansprüche 1 bis 4, **dadurch gekennzeichnet, dass** die Paare in einem Bereich der Funktion (12) ausgewählt werden, in dem die Funktion eine konstante Steigung (A) aufweist.

6. Verfahren gemäß Anspruch 5, **dadurch gekennzeichnet, dass** die Laufzeit (tt) durch Auswählen eines Punktes (t_{c}) auf einer Zeitachse, in dem die konstante Steigung (A) die Zeitachse schneidet, und Subtrahieren einer konstanten Versatzzeit (t_{off}) von diesem Punkt bestimmt wird.

7. Verfahren gemäß Anspruch 5 oder 6, **dadurch gekennzeichnet, dass** mehr als zwei Paare von Zeitdifferenzen und Zeiten verwendet werden, um zu bestimmen, ob die Steigung (A) konstant ist.

8. Verfahren gemäß einem der Ansprüche 5 bis 7, **dadurch gekennzeichnet, dass** die Paare in einem mittleren Bereich des Empfangssignals (8) ausgewählt werden.

9. Verfahren gemäß einem der Ansprüche 1 bis 8, **dadurch gekennzeichnet, dass** das erste Sendesignal (8) und das zweite Sendesignal (9) unter Verwendung einer gleichen Frequenzquelle erzeugt werden, die eine Masterfrequenz (f_{clk}) erzeugt, wobei die erste Frequenz (f_{TX1}) und die zweite Frequenz (f_{TX2}) durch Dividieren der Masterfrequenz (f_{clk}) durch unterschiedliche Faktoren erzeugt werden.

10. Verfahren gemäß Anspruch 9, **dadurch gekennzeichnet, dass** die erste Frequenz (f_{TX1}) durch Dividieren der Masterfrequenz (f_{clk}) durch einen ersten Faktor erzeugt wird und die zweite Frequenz (T_{x2B}) durch Dividieren der Masterfrequenz (f_{clk}) abwechselnd durch einen zweiten Faktor und einen dritten Faktor, der von dem zweiten Faktor verschieden ist, erzeugt wird.

11. Verfahren gemäß Anspruch 10, **dadurch gekennzeichnet, dass** in dem Empfangssignal Nulldurchgänge an Punkten gemessen werden, die ein Vielfaches von zwei Zyklen voneinander entfernt sind.

12. Verfahren gemäß einem der Ansprüche 1 bis 8, **dadurch gekennzeichnet, dass** das erste Sendesignal (8) und das zweite Sendesignal (9) unter Verwendung unterschiedlicher Masterfrequenzen und des gleichen Faktors zum Dividieren der Masterfrequenzen erzeugt werden.

13. Durchflussmesser, insbesondere Ultraschalldurchflussmesser, umfassend Mittel zum Erzeugen eines ersten Sendesignals (8) mit einer ersten Frequenz (f_{Tx1}) und Mittel zum Erkennen eines ersten Empfangssignals (10), Mittel zum Erzeugen eines zweiten Sendesignals (9) mit einer zweiten Frequenz (f_{Tx2}), die von der ersten Frequenz (f_{Tx1}) verschieden ist, und Mittel zum Erkennen eines zweiten Empfangssignals (11), wobei Steuermittel mit den Mitteln zum Erzeugen des ersten Sendesignals (8), mit den Mitteln zum Erkennen des ersten Empfangssignals (10), mit den Mitteln zum Erzeugen des zweiten Sendesignals (9) und mit den Mitteln zum Erkennen des zweiten Empfangssignals (11) verbunden sind, wobei die Steuermittel die Laufzeit unter Verwendung einer Zeitfunktion basierend auf Eigenschaften der beiden Empfangssignale bestimmen (10, 11), wobei die Steuermittel eine Zeit, in der eine vorbestimmte Eigenschaft des ersten Empfangssignals (11) eine vorbestimmte Bedingung erfüllt, als eine erste Zeit (t_{Z1A}), eine Zeit, in der eine entsprechende vorbestimmte Eigenschaft des Empfangssignals die Bedingung erfüllt, als eine zweite Zeit (t_{Z2A}), eine Zeit, in der die vorbestimmte Eigenschaft des ersten Empfangssignals (11) die Bedingung später wieder erfüllt, als eine dritte Zeit (t_{Z1B}), eine Zeit, in der die vorbestimmte Eigenschaft des zweiten Empfangssignals die Bedingung später wieder erfüllt, als eine vierte Zeit (t_{Z2B}), eine erste Zeitdifferenz (D_{A}) zwischen der zweiten Zeit (t_{2A}) und der ersten Zeit (t_{Z1}) und eine zweite Zeitdifferenz (D_{B}) zwischen der vierten Zeit (t_{Z2B}) und der dritten Zeit (t_{Z1B}) definiert,
**dadurch gekennzeichnet, dass** die Steuermittel die Laufzeit (tₜ) unter Verwendung einer Funktion (12) von Zeitdifferenzen (Dₙ) (tₙ)) über die Zeit (tₙ) bestimmt, wobei die Funktion (12) mindestens ein Paar aus der ersten Zeitdifferenz (D_{A}) und eines der ersten Zeit (t_{Z1A}) und der zweiten Zeit (t_{Z2A}) und ein Paar aus der zweiten Zeitdifferenz (D_{B}) und eines der dritten Zeit (t_{Z1B}) und der vierten Zeit (t_{Z2B}) umfasst.

## Revendications

1. Procédé de détermination du temps de transit (tₜ) d'une salve d'ultrasons, en particulier dans un débitmètre à ultrasons, ledit procédé comportant les étapes consistant à générer un premier signal (8) d'émission présentant une première fréquence (f_{Tx1}) et à détecter un premier signal (10) de réception, à générer un deuxième signal (9) d'émission présentant une deuxième fréquence (f_{Tx2}) différente de ladite première fréquence (f_{Tx1}) et à détecter un deuxième signal (11) de réception, une fonction du temps basée sur des caractéristiques des deux signaux (10, 11) de réception étant utilisée pour déterminer le temps de transit, un instant auquel une caractéristique prédéterminée dudit premier signal (11) de réception satisfait une condition prédéterminée étant déterminé en tant que premier instant (t_{Z1A}), un instant auquel une caractéristique prédéterminée correspondante dudit deuxième signal de réception satisfait ladite condition étant déterminé en tant que deuxième instant (t_{Z2A}), un instant auquel ladite caractéristique prédéterminée dudit premier signal (11) de réception satisfait à nouveau ladite condition ultérieurement étant déterminé en tant que troisième instant (t_{Z1B}), un instant auquel ladite caractéristique prédéterminée dudit deuxième signal de réception satisfait à nouveau ladite condition ultérieurement étant déterminé en tant que quatrième instant (t_{Z2B}), une première différence de temps (D_{A}) entre ledit deuxième instant (t_{Z2A}) et ledit premier instant (t_{Z1A}) étant déterminée, et une deuxième différence de temps (D_{B}) entre ledit quatrième instant (t_{Z2B}) et ledit troisième instant (t_{Z1B}) étant déterminée, **caractérisé en ce que** ledit temps de transit (tₜ) est déterminé à l'aide d'une fonction (12) de différences de temps (Dₙ(tₙ)) dans le temps (tₙ), ladite fonction (12) comportant au moins une paire constituée de ladite première différence de temps (D_{A}) et d'un instant parmi ledit premier instant (t_{Z1A}) et ledit deuxième instant (t_{Z2A}) et une paire constituée de ladite deuxième différence de temps (D_{B}) et d'un instant parmi ledit troisième instant (t_{Z1B}) et ledit quatrième instant (t_{Z2B}) .

2. Procédé selon la revendication 1, **caractérisé en ce que** ladite caractéristique prédéterminée est un niveau d'amplitude.

3. Procédé selon la revendication 2, **caractérisé en ce que** ladite condition prédéterminée est un passage par zéro.

4. Procédé selon l'une quelconque des revendications 1 à 3, **caractérisé en ce que** ladite fonction (12) comporte au moins une paire constituée de ladite première différence de temps (D_{A}) et dudit premier instant (t_{Z1A}) et une paire constituée de ladite deuxième différence de temps (D_{B}) et dudit troisième instant (t_{Z1B}).

5. Procédé selon l'une quelconque des revendications 1 à 4, **caractérisé en ce que** lesdites paires sont sélectionnées dans un intervalle de ladite fonction (12) où ladite fonction présente une pente constante (A).

6. Procédé selon la revendication 5, **caractérisé en ce que** ledit temps de transit (tt) est déterminé en sélectionnant un point (t_{c}) sur un axe des temps où ladite pente constante (A) croise ledit axe des temps et en soustrayant dudit point un temps de décalage (t_{off}) constant.

7. Procédé selon la revendication 5 ou 6, **caractérisé en ce que** plus de deux paires de différences de temps et d'instants sont utilisées pour déterminer si ladite pente (A) est constante.

8. Procédé selon l'une quelconque des revendications 5 à 7, **caractérisé en ce que** lesdites paires sont sélectionnées dans une région médiane dudit signal (8) de réception.

9. Procédé selon l'une quelconque des revendications 1 à 8, **caractérisé en ce que** ledit premier signal (8) d'émission et ledit deuxième signal (9) d'émission sont générés à l'aide d'une même source de fréquence produisant une fréquence pilote (f_{clk}), ladite première fréquence (f_{Tx1}) et ladite deuxième fréquence (f_{Tx2}) étant générées en divisant ladite fréquence pilote (f_{clk}) par des facteurs différents.

10. Procédé selon la revendication 9, **caractérisé en ce que** ladite première fréquence (f_{Tx1}) est générée en divisant ladite fréquence pilote (f_{clk}) par un premier facteur et ladite deuxième fréquence (T_{x2B}) est générée en divisant ladite fréquence pilote (f_{clk}) alternativement par un deuxième facteur et un troisième facteur différent dudit deuxième facteur.

11. Procédé selon la revendication 10, **caractérisé en ce que** lesdits passages par zéro des signaux de réception sont mesurés en des points séparés par un multiple de deux cycles.

12. Procédé selon l'une quelconque des revendications 1 à 8, **caractérisé en ce que** ledit premier signal (8) d'émission et ledit deuxième signal (9) d'émission sont générés en utilisant des fréquences pilotes différentes et le même facteur pour diviser lesdites fréquences pilotes.

13. Débitmètre, en particulier un débitmètre à ultrasons, comportant des moyens servant à générer un premier signal (8) d'émission présentant une première fréquence (f_{Tx1}) et des moyens servant à détecter un premier signal (10) de réception, des moyens servant à générer un deuxième signal (9) d'émission présentant une deuxième fréquence f_{Tx2}) différente de ladite première fréquence (f_{Tx1}) et des moyens servant à détecter un deuxième signal (11) de réception, des moyens de commande étant reliés auxdits moyens servant à générer ledit premier signal (8) d'émission, auxdits moyens servant à détecter ledit premier signal (10) de réception, auxdits moyens servant à générer ledit deuxième signal (9) d'émission, et auxdits moyens servant à détecter ledit deuxième signal (11) de réception, lesdits moyens de commande déterminant le temps de transit au moyen d'une fonction du temps basée sur des caractéristiques des deux signaux (10, 11) de réception, les moyens de commande déterminant un instant auquel une caractéristique prédéterminée dudit premier signal (11) de réception satisfait une condition prédéterminée en tant que premier instant (t_{Z1A}), un instant auquel une caractéristique prédéterminée correspondante dudit signal de réception satisfait ladite condition en tant que deuxième instant (t_{Z2A}), un instant auquel ladite caractéristique prédéterminée dudit premier signal (11) de réception satisfait à nouveau ladite condition ultérieurement en tant que troisième instant (t_{Z1B}), un instant auquel ladite caractéristique prédéterminée dudit deuxième signal de réception satisfait à nouveau ladite condition ultérieurement en tant que quatrième instant (t_{Z2B}), une première différence de temps (D_{A}) entre ledit deuxième instant (t_{2A}) et ledit premier instant (t_{Z1}) et une deuxième différence de temps (D_{B}) entre ledit quatrième instant (t_{Z2B}) et ledit troisième instant (t_{Z1B}),
**caractérisé en ce que** les moyens de commande déterminent ledit temps de transit (tₜ) à l'aide d'une fonction (12) de différences de temps (Dₙ(tₙ)) dans le temps (tₙ), ladite fonction (12) comportant au moins une paire constituée de ladite première différence de temps (D_{A}) et d'un instant parmi ledit premier instant (t_{Z1A}) et ledit deuxième instant (t_{Z2A}) et une paire constituée de ladite deuxième différence de temps (D_{B}) et d'un instant parmi ledit troisième instant (t_{Z1B}) et ledit quatrième instant (t_{Z2B}).
